**Europäisches Patentamt**

**European Patent Office**

**Office européen des brevets**

(11) Veröffentlichungsnummer : **0 102 080 B2**

(12) **NEUE EUROPÄISCHE PATENTSCHRIFT**

(45) Veröffentlichungstag der neuen Patentschrift :
**02.12.92 Patentblatt 92/49**

(21) Anmeldenummer : **83108527.9**

(22) Anmeldetag : **30.08.83**

(51) Int. Cl.⁵ : **F16N 29/04,** F01M 11/12,
F02B 77/08

(54) **Vorrichtung zur Füllmengeneinstellung von Schmierölen in Antriebsaggregaten.**

(30) Priorität : **01.09.82 DE 3232465**

(43) Veröffentlichungstag der Anmeldung :
**07.03.84 Patentblatt 84/10**

(45) Bekanntmachung des Hinweises auf die
Patenterteilung :
**20.01.88 Patentblatt 88/03**

(45) Bekanntmachung des Hinweises auf die
Entscheidung über den Einspruch :
**02.12.92 Patentblatt 92/49**

(84) Benannte Vertragsstaaten :
**AT BE FR GB IT LU NL SE**

(56) Entgegenhaltungen :
CH-A- 486 061
DE-A- 2 308 370
DE-A- 2 433 878
DE-A- 2 904 145
DE-B- 1 573 085
DE-B- 2 423 415

(56) Entgegenhaltungen :
US-A- 1 936 778
US-A- 2 671 529
US-A- 3 570 528
US-A- 3 882 967
"Querschnitt, Entwicklung, Konstruktion, Anwendung" VDO Tachometer-Werke, Adolf
Schindling GmbH, Frankfurt/Main, 2.Folge,Okt.
1967, S. 23-25

(73) Patentinhaber : **Bayerische Motoren Werke
Aktiengesellschaft
Patentabteilung AJ-30 Postfach 40 02 40
Petuelring 130
W-8000 München 40 (DE)**

(72) Erfinder : **Weishaupt, Walter
Im Wismat 28
W-8000 München 60 (DE)**

(74) Vertreter : **Bullwein, Fritz et al
Bayerische Motoren Werke
Aktiengesellschaft Postfach 40 02 40 - AJ-23
Petuelring 130
W-8000 München 40 (DE)**

EP 0 102 080 B2

**Beschreibung**

Die Erfindung bezieht sich auf eine Vorrichtung zur Füllmengen-einstellung von Schmierölen in Antriebsaggregaten gemäß dem Oberbegriff von Anspruch 1. Füllstandsbestimmungen werden heute in der Regel manuell mit Hilfe eines Peilstabs vorgenommen. Daneben ist es bekannt, mit Hilfe von insbesondere elektrischen Gebern, die kapazitiv oder mit Hilfe eines Hitzdrahtelements arbeiten (US-A-3 882 967), den Füllstand selbsttätig zu bestimmen. Dabei erfolgt die Bestimmung entweder während des Betriebs oder unmittelbar bei Betriebsende des Antriebsaggregats. Diese beiden Möglichkeiten liefern ein unzureichendes Bild von der tatsächlich vorhandenen Schmierölmenge. Ursache dafür ist, daß das Schmieröl während und bei Ende des Betriebs noch im Schmierölkreislauf ist und der in der Regel in einem Sammelbehälter vorliegende Füllstand eine zu geringe Ölmenge simuliert. Häufig wird dabei der Schmierölstand auf das vermeintlich richtige, in Wirklichkeit jedoch zu hohe Niveau durch Nachfüllen von Schmieröl gebracht. Die Verwendung eines Gebers mit nur einem Fühlelement, in z.B. einem einzigen Hitzdrahtelelement, führt dazu, daß zwischen einer Unterschreitung des Soll- oder Mindest-Füllstands durch einen Ölverlust und durch eine Schräglage des Kraftfahrzeugs nicht unterschieden werden kann.

Ähnliches gilt auch bei einer Vorrichtung, wie sie aus der US-A-35 70528 bekannt ist. Dabei sind zwei Fühlelemente vorgesehen, die sich jedoch auf gleichem Niveau an zwei räumlich voneinander getrennten, in einer Ebene parallel zum Mindest-Niveau liegenden Stellen befinden. Über eine Verzögerungseinrichtung wird verhindert, daß bei einem nur kurzzeitigen Ansprechen der beiden Fühlelemente versehentlich Schmieröl nachfüllt wird. Diese Vorrichtung arbeitet nur während des Betriebs der Brennkraftmaschinen.

Eine Vorrichtung nach dem Oberbegriff des Anspruchs 1 ist aus der DE-A-23 08 370 bekannt. Das eine Fühlelement ist dabei vertikal verfahrbar und liefert bei seinem Auftreffen auf die Oberfläche des Schmieröls ein Signal, anhand dessen der Schmierölstand ermittelt wird. Es ist ferner vorgesehen, das Ausgangssignal dieses Fühlelements einer Schmieröl-Nachfüllvorrichtung zuzuführen. Das zweite Fühlelement sitzt höher als das genannte Fühlelement und löst durch Nachfüllen von Öl einen Impuls aus, der einen sofortigen Meß- und Anzeigevorgang für den veränderten Ölfüllgrad einleitet. Bei der bekannten Vorrichtung ist nich erkennbar, in welchen Fällen und in welchem Umfang tatsächlich ein Schmieröl-Nachfüllvorgang durchgeführt wird. Es ist auch nicht erkennbar, inwieweit hierfür eine mögliche Schräglage des Kraftfahrzeugs mit einem dann möglichen nur vermeintlich zu niedrigen Schmieröl-Niveau und ein tatsächlicher Ölverlust berücksichtigt wird.

Der Erfindung liegt die Aufgabe zugrunde, eine Vorrichtung der eingangs genannten Art zü schaffen, die einen Betrieb der Schmieröl-Nachfüllvorrichtung in aller Regel nur dann durchführt, wenn dies aufgrund eines betriebsbedingten Ölverlusts erforderlich ist.

Die Erfindung löst diese Aufgabe durch die kennzeichnenden Merkmale des Patentanspruchs 1.

Die Lage der beiden Fühlelemente ist zweckmäßigerweise so gewählt, daß das für das Auslösen der Schmieröl-Nachfülleinrichtung maßgebliche Mindestnivenau gerade zwischen den beiden Niveaus liegt, auf denen die beiden Fühlelement liegen. Damit erfolgt ein Schmieröl-Nachfüllvorgang dann, wenn das Mindestniveau erreicht ist. Bei einer Schräglage des Kraftfahrzeugs tritt in aller Regel der Fall ein, daß beide Fühlelemente in oder aber außerhalb des Schmieröls liegen. In beiden Fällen wird dann aber kein Schmieröl-Nachfüllvorgang ausgelöst.

Der Nachfüllvorgang wird nach Betriebsende des Antriebsaggregats dann ausgelöst, wenn die vorgegebene Zeit abgelaufen ist. Gemäß vorteilhaften Ausgestaltungen der Erfindung kann die vorgegebene Zeit von einer Betriebstemperatur des Antriebsaggregats abhängig sein. Dabei kann es sich beispeilsweise um die Temperatur des Kühlmittels oder des Schmieröls selbst handeln. Auf diese Weise läßt sich berücksichtigen, daß Schmieröl bei unterschiedlichen Temperaturen unterschiedliche Viskosität besitzt und, sofern keine Verluste auftreten, der ursprüngliche Füllzustand zu unterschiedlichen Zeiten erreicht wird. Durch diese Anpassung der Schaltzeit des Zeitglieds wird es möglich, unbhängig von der Temperatur des Schmieröls dessen Niveau etwa zu dem Zeitpunkt zu bestimmen, zu dem es den ursprünglichen Wert erreicht haben müßte. Diese Bestimmung erfolgt damit gerade bei Aufeinanderfolgen in Kurzzeitbetrieben des Antriebsaggregats relativ häufig und bietet ein Gewähr dafür, daß ein Schmierölverlust sicher erkannt werden kann.

Mit Hilfe der erfindungsgemäßen Vorrichtung wird der Schmierölstand selbsttätig auf das erforderliche Niveau gebracht. Die Arbeitsweise dieser Vorrichtung kann so sein, daß stets eine definierte Menge nachgefüllt wird. Dabei läßt sich ebenfalls einer der Grundgedanken der Erfindung, das Zeitverhalten des Schmieröls zu berücksichtigen, benutzt werden. Dieses Verhalten hat nämlich zur Folge, daß in der gleichen Zeit temperaturabhängig eine unterschliedliche Schmierölmenge nachläuft. Um stets die gleiche Nachlaufmenge zu erreichen, ist es daher vorteihaft, die Zeitdauer, während das Schmieröl nachgefüllt wird, temperaturabhängig zu steuern. Dabei kann der Nachlauf mit Hilfe einer an sich bekannten Schmierölpumpe vorgenommen werden.

Die Nachfüllmenge kann so gering bemessen sein, daß ein Überfüllen mit größter Sicherheit ausgeschlossen wird. Eine derart geringe Nachfüllmenge hat aber zur Folge, daß der erforderliche Schmierölstand häufig nicht bei einmaligem Nachfüllen erreicht wird. In diesem Fall soll die Nachfüllung iterativ vorgenommen werden. In zeitlich regelmäßigen Abständen wird eine Füllstandsbestimmung nach vorangegangenem Nachfüllen solange vorgenommen. bis der erforderliche Schmierölstand erreicht ist. Diese aufeinanderfolgenden Füllstandsbestimmungen sollen ebenfalls in einem vorgegebenem zeitlichen Abstand vorgenommen werden. um mit relativ geringem Aufwand eine präzise Aussage über die tatsächlich vorhandene Schmierölmenge zu erhalten. Hierzu kann wiederum das Zeitglied verwendet werden. das die aufeinanderfolgenden Nachfüllvorgänge steuert.

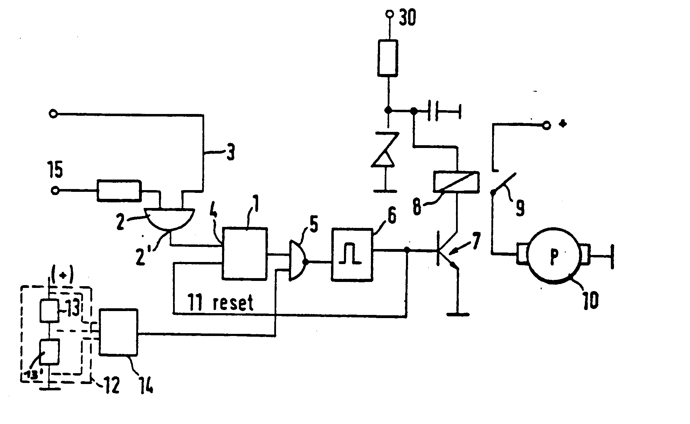

In der Zeichnung ist ein Ausführungsbeispiel der Erfindung dargestellt. Diese zeigt eine Nachfülleinrichtung für Schmieröl eines Antriebsaggregates.

Ein Antriebsaggregat. vorzugsweise für Kraftfahrzeuge. in Form einer Brennkraftmaschine oder eines Getriebes, enthält eine Schmieröl-Nachfülleinrichtung. die nach einer vorgegebenen Zeit von beispielsweise 8 Minuten nach dem Abstellen im Bedarfsfall das Schmieröl ergänzt. Dies erfolgt mit Hilfe einer Pumpe 10, deren Steuerschaltung im einzelnen gezeigt ist.

Die Steuerschaltung enthält als zentrales Element ein Zeitglied 1. das 8 Minuten nach seiner Ansteuerung sein Ausgangssignal ändert. Die Ansteuerung erfolgt über ein UND-Glied 2, das an einen Zündstromkreis 15 und an einen Öldruck-Prüfkreis 3 angeschlossen ist. Der Ausgang 2′ des UND-Glieds 2 ist mit einem Eingang 4 des Zeitglieds 1 verbunden.

Das Ausgangssignal des Zeitglieds 1 ist über ein NAND-Glied 5 auf ein Monoflop 6 geführt. das einen Leistungstransistor 7 steuert. In dessen Kollektorkreis liegt die Spule eines Relais 8, dessen Arbeitskontakt 9 die Schmieröl-Pumpe 10 steuert.

Das Monoflop 6 besitzt eine Schaltzeit von beispielsweise 20 Sekunden. Die Pumpe 10 fördert während dieser Zeit beispielsweise eine Ölmenge. die bei betriebswarmer Brennkraftmaschine bei 0,1 l liegt. Das Ausgangssignal des Monoflops ist ferner auf einen Reset-Eingang 11 des Zeitglieds 1 geführt. Ferner ist am NAND-Glied 5 ein Füllstands-Geber 12 angeschlossen, der schematisch dargestellt ist. Dabei handelt es sich um einen Geber mit zwei Fühlelementen beispielsweise in Form von zwei Hitzdrahtelementen 13, 13′, die übereinander beispielsweise längs bzw. an Stelle eines üblicherweise vorhandenen Peilstabs angeordnet sind. Werden diese Elemente definiert mit Strom versorgt, so ist ihr Widerstandsverhalten abhängig davon. ob sie in Öl eingetaucht sind. Unterschiedliche Widerstände lassen erkennen, daß eines der beiden Elemente ausgetaucht ist und ein Nachfüllen von Schmieröl erforderlich ist. Die Widerstände der beiden Elemente können beispielsweise mit Hilfe eines Komparators 14 auf einfache Weise verglichen und in ein Ausgangssignal für das NAND-Glied 5 umgesetzt werden.

Etwa 8 Minuten nach dem Abstellen des Antriebsaggregats - die beiden Eingangssignale des UND-Glieds 2 ändern sich bei oder unmittelbar nach dem Abstellen - ändert auch das Zeitglied 1 sein Ausgangssignal und schaltet damit den Füllstands-Geber 12 für das Schmieröl wirksam. Der Ölstand hat zu diesem Zeitpunkt aufgrund des bis dahin aus dem Kreislauf wieder zurückgeflossenen Öls einen Wert erreicht, der eine Präzise Aussage über die tatsächliche gesamte Ölmenge ermöglicht. Liegt dieser Ölstand über oder unter einem vorgegebenen Mindestniveau, so ändert das NAND-Glied 5 sein Ausgangssignal nicht. Liegt er hingegen bei oder in der Nähe des Mindest-Niveaus so ändert das NAND-Glied sein Ausgangssignal. Das Monoflop 6 steuert für 20 Sekunden über den Transistor 7 die Pumpe 10 an. Gleichzeitig wird das Zeitglied 1 zurückgesetzt. Das Mindestniveau liegt gerade zwischen den beiden Niveaus, auf denen die Fühlelemente liegen.

Ist die geförderte Nachfüllmenge ausreichend. um das Mindest-Niveau zu überschreiten, so erfolgt kein weiterer Nachfüllvorgang. Ist die Menge jedoch nicht ausreichend, so erfolgt nach weiteren 8 Minuten ein erneuter Nachfüllvorgang. Der schaltungsmäßige Ablauf ist hierbei wie beim Abstellen des Antriebsaggregats. Acht Minuten nach dem Reset-Signal am Eingang 11 und bei weiterhin ausgeschaltetem Antriebsaggregat - der Eingang 4 ist dann weiterhin durch das UND-Glied 2 angesteuert - wird durch das Zeitglied 1 und das unterhalb bzw. bei Mindest-Niveau des Schmieröls durch den Geber 12 angesteuerte NAND-Glied 5 erneut das Monoflop 6 und damit die Pumpe 10 angesteuert. Dieses iterative Nachfüllen wird solange fortgesetzt, bis das Mindest-Niveau überschritten ist.

Die Zeit nach dem Abstellen des Antriebsaggregats bzw. dem Nachfüllen von Schmieröl. nach dem ein (erneutes) Nachfüllen erfolgt. kann auch beispielsweise einer Betriebstemperatur angepaßt sein. Anstelle des Zeitglieds 1 mit konstanter Schaltzeit - im dargestellten Fall von 8 Minuten - können beispielsweise mehrere Zeitglieder mit beispielsweise zwei Minuten Schaltzeit hintereinander geschaltet werden. die entsprechend der Betriebstemperatur - beispielsweise der Temperatur des Schmieröls bzw. eines Kühlmittels - eingeschaltet bzw. überbrückt werden.

Auf die gleiche Weise kann die Einschaltzeit der Pumpe 10 variiert bzw. so angepaßt werden, daß die Nachfüllmenge unabhängig von der tatsächlichen Temperatur des Schmieröls stets konstant ist. In diesem Fall ist beispielsweise anstelle des Monoflops 6 die Hintereinanderschaltung mehrerer derartiger Monoflops vorzusehen. die entsprechend der Schmieröltemperatur eingeschaltet bzw. überbrückt werden.

In jedem Fall ergibt sich durch die Erfindung eine besonders einfache und wirksame Vorrichtung zur Füllstandsbestimmung bzw.-korrektur von Schmieröl eines Antriebsaggregats. die eine präzise Aussage über die tatsächliche Schmierölmenge ermöglicht und in Verbindung mit einer Nachfülleinrichtung ein Überfüllen ausschließt.

**Patentansprüche**

1. Vorrichtung zur Fülmengeneinstellung von Schmierölen in Antriebsaggregaten, bei der nach dem Abstellen des Antriebsaggregats, wenn das Schmieröl zur Ruhe gekommen ist, ein zwei Fühlelemente (13, 13') enthaltender und mittels eines Zeitglieds (1) eine vorgegebene Zeit von einigen Minuten nach dem Abstellen des Antriebsaggregats wirksam schaltbarer Füllstandsgeber (12) ein Ausgangssignal für einen anormalen Füllstand an eine Schmieröl-Nachfülleinrichtung (Pumpe 10) liefert, dadurch gekennzeichnet, daß die Fühlelemente (13, 13') des Füllstandgebers (12) benachbart übereinander angeordnet sind und daß das Ausgangssignal die Abgabe einer bestimmten Ölmange durch die Schmieröl-Nachfülleinrichtung (10) nur bei unterschiedlichem Ansprechen der beiden Fühlelemente durch Austauchen eines der beiden Fühlelemente bewirkt.

2. Vorrichtung nach Anspruch 1, dadurch gekennzeichnet, daß die vorgegebene Zeit konstant ist.

3. Vorrichtung nach Anspruch 1, dadurch gekennzeichnet, daß daß die vorgegebene Zeit von einer Betriebstemperatur abhängig ist.

4. Vorrichtung nach einem der Ansprüche 1 bis 3, dadurch gekennzeichnet, daß das Zeitglied (1) auch ein erneutes Nachfüllen nach dem vorangegangenen Nachfüllen steuert.

**Claims**

1. A device for adjusting the filling level of lubricant oils in drive assemblies whereby, after shut-off of the drive assembly and upon settling of the lubricant oil, a switchable filling level sensor (12) which has two sensing elements (13, 13') and which is rendered operative after a pre-determined time interval of a few minutes by means of a time member (1), supplies an output signal for an abnormal filling level to a lubricant oil replenishment device (pump 10), characterised in that the sensing elements (13, 13') of the filling level sensor (12) are arranged one above the other and that the output signal initiates the release of a particular quantity of oil through the lubricant oil replenishment device (10) only in the event of different responses of the two sensing elements due to one of the sensing elements no longer being immersed in oil.

2. A device in accordance with Claim 1, characterised in that the pre-determined time is constant.

3. A device in accordance with Claim 1, characterised in that the pre-determined time is dependent on an operating temperature.

4. A device in accordance with any one of Claims 1-3, characterised in that the time member (1) also controls renewed replenishment after the preceding replenishment.

**Revendications**

1. Dispositif pour le réglage de la quantité de remplissage en huile de lubrification dans des machines d'entraînement, dispositif dans lequel, après l'arrêt de la machine d'entraînement, lorsque l'huile est reposée, un indicateur de niveau de remplissage (12) comprenant deux éléments capteurs (13, 13') et susceptibles d'être commutés par un organe de temporisation (1) au bout d'un temps prédéfini de quelques minutes après l'arrêt de la machine d'entraînement, délivre à un dispositif de remplissage complémentaire en huile de lubrification (pompe 10), un signal de sortie d'état de remplissage anormal, dispositif caractérisé en ce que les éléments capteurs (13, 13') de l'indicateur d'état de remplissage, sont disposés au voisinage l'un de l'autre et au-dessus l'un de l'autre et en ce que le signal de sortie provoque la distribution d'une quantité d'huile déterminé par le dispositif de remplissage complémentaire (10) seulement lorsque les deux éléments capteurs réagissent de façon différente du fait que l'un de ces deux éléments capteurs n'est pas immergé dans l'huile.

2. Dispositif selon la revendication 1, caractérisé en ce que le temps prédéfini est constant.

3. Dispositif selon la revendication 1, caractérisé en ce que le temps prédéfini est dépendant d'une température de fonctionnement.

4. Dispositif selon une des revendications 1 à 3, caractérisé en ce que l'organe de temporisation (1) commande aussi un nouveau remplissage complémentaire après le remplissage complémentaire précédent.